# EUROPEAN PATENT APPLICATION

(11) **EP 3 772 583 A1**
(43) Date of publication of application: **10.02.2021**
(21) Application number: 19191063.7
(22) Date of filing: 09.08.2019
(51) Int. Cl.: F03D 7/02, F03D 17/00

(54) **METHOD AND SYSTEM FOR REDUCTION OF NOISE OF WIND TURBINES**

(71) Applicant: General Electric Company, Schenectady, NY 12345 (US)
(72) Inventor: Petersen, Andreas, 48499 Salzbergen (DE); Klaas, Bernd, 49779 Niederlangen (DE); Duettmann, Martin, 49779 Niederlangen (DE)
(74) Representative: Zimmermann & Partner Patentanwälte mbB

(57) **Abstract**

A method (100,200) of reducing a noise emitted by at least one of rotor blades of a wind turbine and a tower of the wind turbine, the wind turbine further including a drivetrain connected to the rotor blades via a hub of the wind turbine, the drivetrain comprising a gearbox, a generator, and a high speed shaft; wherein the gearbox and the generator are coupled by the high speed shaft; the method (100,200) including determining (110,210) an occurrence of the noise, and applying (120,230) a braking torque upon determining the noise, wherein the braking torque is applied to the high speed shaft during normal operation of the wind turbine to reduce the noise.

## Description

### FIELD

The present subject matter relates generally to wind turbines, and more particularly to a method of reducing a noise emitted by at least one of rotor blades of a wind turbine and a tower of the wind turbine.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, a hub and one or more rotor blades. The rotor blades capture kinetic energy from wind using known foil principles and transmit the kinetic energy through rotational energy to turn a main shaft coupling the rotor blades to a gearbox, or if a gearbox is not used, directly to the generator. The generator then converts the mechanical energy to electrical energy that may be deployed to a utility grid.

During standard operation of a wind turbine, rotating parts of the wind turbine may cause vibrations in the wind turbine. In particular, vibrations can originate from a drivetrain of the wind turbine, the drivetrain including a gearbox, a generator and a high speed shaft coupling the generator and the gearbox. Vibrations in the drivetrain can be transmitted to a tower of the wind turbine or via a hub to rotor blades of the wind turbine and can be emitted as airborne noise to the surrounding environment. In particular, the noise can be in an audible range and may be perceived as disturbing.

Accordingly, the present disclosure is directed to a method of reducing a noise emitted by at least one of rotor blades of a wind turbine and a tower of the wind turbine.

### BRIEF DESCRIPTION

Aspects and advantages of the invention will be set forth in part in the following description, or may be obvious from the description, or may be learned through practice of the invention.

In one aspect, the present disclosure is directed to a method of reducing a noise emitted by at least one of rotor blades of a wind turbine and a tower of the wind turbine, the wind turbine further including: a drivetrain connected to the rotor blades via a hub of the wind turbine, the drivetrain including a gearbox, a generator, and a high speed shaft; wherein the gearbox and the generator are coupled by the high speed shaft; the method including: determining an occurrence of the noise; and applying a braking torque upon determining the noise, wherein the braking torque is applied to the high speed shaft during normal operation of the wind turbine to reduce the noise. It should be understood that the method may further include any of the additional steps and/or features as described herein.

In another aspect, the present disclosure is directed to a method of reducing a noise emitted by at least one of rotor blades of a wind turbine and a tower of the wind turbine, the wind turbine further including: a drivetrain connected to the rotor blades via a hub of the wind turbine, the drivetrain including a gearbox, a generator, and a high speed shaft; wherein the gearbox and the generator are coupled by the high speed shaft; the method including: determining an occurrence of the noise; and applying a braking torque upon determining the noise, wherein the braking torque is applied to the high speed shaft during normal operation of the wind turbine to reduce the noise, and wherein the braking torque is varied with a counter-vibration frequency of at least 50 Hz.

In yet another aspect, the present disclosure is directed to a noise reduction system for reducing a noise emitted by at least one of rotor blades of a wind turbine and a tower of the wind turbine, the wind turbine further including: a drivetrain connected to the rotor blade via a hub of the wind turbine, the drivetrain including a gearbox, a generator, and a high speed shaft; wherein the gearbox and the generator are coupled by the high speed shaft; the noise reduction system including: a sensor device; a noise attenuator configured for applying a braking torque to the high speed shaft; and a controller coupled to the sensor device and to the noise attenuator; wherein the controller is configured for determining an occurrence of the noise depending on a signal received from the sensor device; and wherein the controller is configured for controlling the noise attenuator to apply the braking torque to the high speed shaft upon determining the noise. It should be understood that the noise reduction system may further include any of the additional features as described herein.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine;
FIG. 2 illustrates a simplified, internal view of a nacelle of a wind turbine, particularly illustrating the nacelle during normal operation;
FIGS. 3-5 each illustrate a schematic view of a drivetrain of a wind turbine, a wind turbine rotor including a hub and rotor blades, and a noise reduction system according to embodiments of the present disclosure;
FIG. 6 illustrates a flow diagram of an embodiment of a method of reducing a noise emitted by at least one of rotor blades of a wind turbine and a tower of the wind turbine according to the present disclosure; and
FIG. 7 illustrates a flow diagram of an exemplary embodiment of a method of reducing a noise emitted by at least one of rotor blades of a wind turbine and a tower of the wind turbine according to the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

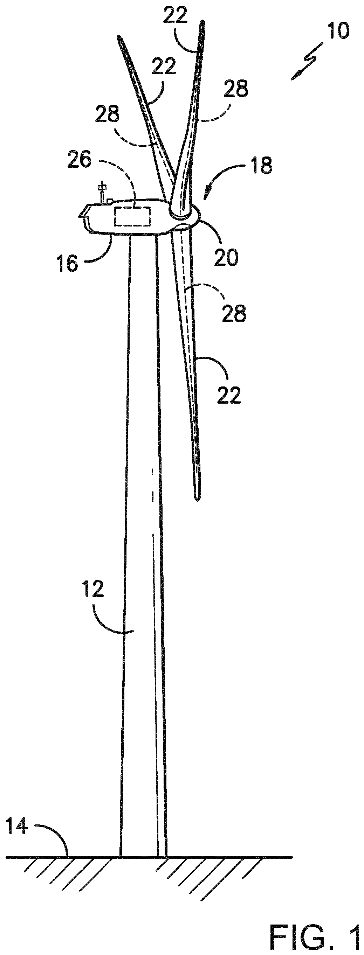

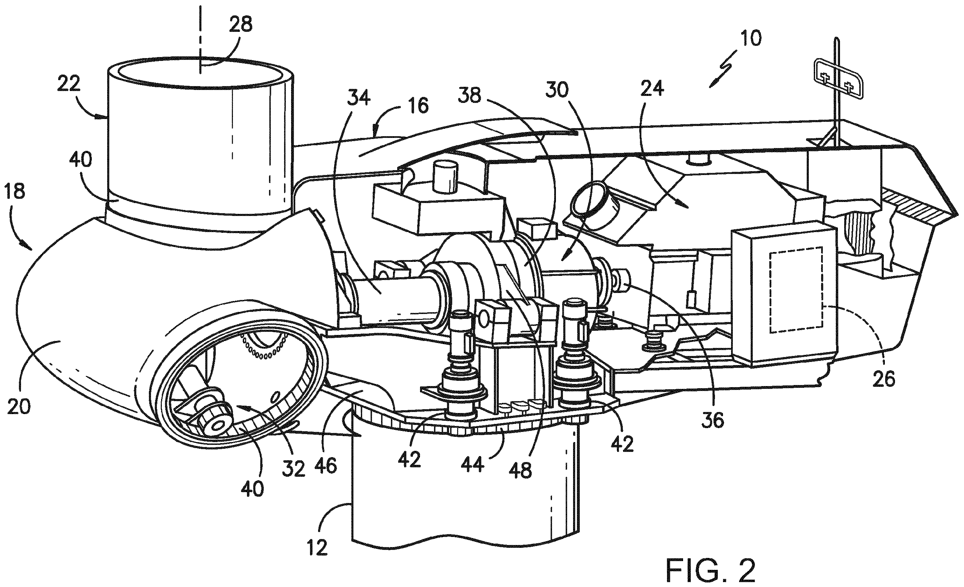

Referring now to the drawings, FIG. 1 illustrates a perspective view of a wind turbine 10. As shown, the wind turbine 10 generally includes a tower 12 extending from a support surface 14, a nacelle 16 mounted on the tower 12, and a rotor 18 coupled to the nacelle 16. Thus, the nacelle 16 corresponds to the overall housing structure and has a bottom wall, opposing side walls, a front wall, a rear wall, and a top wall. Further, the front wall may have a main shaft opening configured to receive a main shaft 34 (FIG. 2) therethrough that is connectable to the rotor 18.

As shown in FIG. 1, the rotor 18 includes a rotatable hub 20 and at least one rotor blade 22 coupled to and extending outwardly from the hub 20. For example, in FIG. 1, the rotor 18 includes three rotor blades 22. However, in alternative wind turbines, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other wind turbines, the wind turbine controller 26 may be located within any other component of the wind turbine 10 or at a location outside the wind turbine 10. Further, the wind turbine controller 26 may be communicatively coupled to any number of the components of the wind turbine 10 in order to control the components. As such, the wind turbine controller 26 may include a computer or other suitable processing unit. Thus, in several wind turbines, the wind turbine controller 26 may include suitable computer-readable instructions that, when implemented, configure the wind turbine controller 26 to perform various different functions, such as receiving, transmitting and/or executing wind turbine control signals.

Referring now to FIG. 2, a simplified, internal view of an exemplary nacelle 16 of the wind turbine 10 shown in FIG. 1, particularly illustrating the drivetrain components thereof, is illustrated. More specifically, as shown, the generator 24 may be coupled to the rotor 18 for producing electrical power from the rotational energy generated by the rotor 18. The rotor 18 may be coupled to the main shaft 34, which is rotatable via a main bearing (not shown). The main shaft 34 may, in turn, be rotatably coupled to a high speed shaft 36 of a drivetrain through a gearbox 30, wherein the high speed shaft 36 can couple the gearbox 30 and the generator 24. The gearbox 30 may include a gearbox housing 38 that is connected to the bedplate 46 by one or more torque arms 48. More specifically, in certain wind turbines, the bedplate 46 may be a forged component in which the main bearing (not shown) is seated and through which the main shaft 34 extends. As is generally understood, the main shaft 34 provides a low speed, high torque input to the gearbox 30 in response to rotation of the rotor blades 22 and the hub 20. Thus, the gearbox 30 converts the low speed, high torque input to a high speed, low torque output to drive the high speed shaft 36 and thus the generator 24.

Each rotor blade 22 may also include a pitch adjustment mechanism 32 configured to rotate each rotor blade 22 about its pitch axis 28 via a pitch bearing 40. Similarly, the wind turbine 10 may include one or more yaw drive mechanisms 42 communicatively coupled to the wind turbine controller 26, with each yaw drive mechanism(s)42 being configured to change the angle of the nacelle 16 relative to the wind (e.g., by engaging a yaw bearing 44 of the wind turbine 10).

According to the present disclosure, a noise can be emitted by at least one of the rotor blades of a wind turbine and a tower of the wind turbine, wherein the noise originates from a vibration of a gear meshing in a gearbox of a drivetrain of the wind turbine. In particular, the noise may be emitted during normal operation of the wind turbine. "Normal operation" of the wind turbine may refer to a state of the wind turbine, in which a rotor of the wind turbine turns and the wind turbine generates electric power. In particular, "normal operation" does not refer to a state of the wind turbine, in which the wind turbine is required to stop the rotor, for example for safety reasons, for inspection, for repair and/or for maintenance.

A noise emitted from a wind turbine may originate from a vibration in a drivetrain of the wind turbine. The vibration in the drivetrain may result from gear meshing in a gearbox of the drivetrain, in particular from first teeth of a first gear in a gearbox transmitting torque to second teeth of a second gear in the gearbox. For example, the vibration can have a vibration frequency which may, at least theoretically, correspond to the product of the number of the first teeth of the first gear and the rotation frequency of the first gear. The vibration can have a vibration frequency of at least 50 Hz, particularly of at least 70 Hz or of at least 100 Hz. The vibration can be a torsional vibration. The vibration may be transmitted from the drivetrain to at least one of a tower of the wind turbine and to a hub and rotor blades of the wind turbine. At least one of the rotor blades and the tower may emit the transmitted vibration as airborne noise to an environment of the wind turbine.

In particular, a drivetrain of a wind turbine may exhibit more than one vibration during normal operation of the wind turbine. For example, the drivetrain, in particular a high speed shaft of the drivetrain, may exhibit a superposition of more than one vibration with respective vibration frequencies. For example, more than one vibration with respective vibration frequencies may originate from a gearbox including more than one gearing stage.

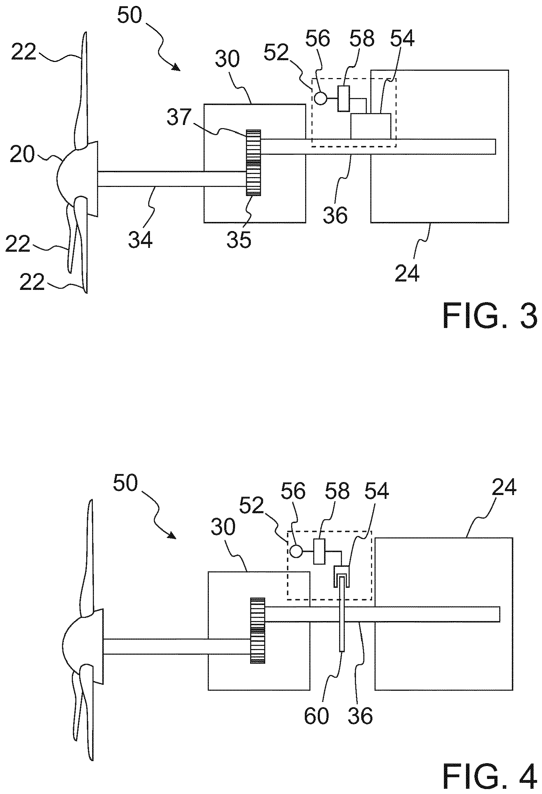

FIG. 3 shows a schematic view of a drivetrain 50 of a wind turbine, wherein the drivetrain 50 is connected to the rotor blades 22 via a hub 20 of the wind turbine. The drivetrain 50 can include a gearbox 30, a generator 24, and a high speed shaft 36, wherein the gearbox 30 and the generator 24 are coupled by the high speed shaft 36. FIG. 3 further shows a noise reduction system 52 according to embodiments of the present disclosure. The noise reduction system 52 includes a sensor device 56, a controller 58 and a noise attenuator 54 configured for applying a braking torque to the high speed shaft 36 of the drivetrain 50. The controller 58 can be coupled, particularly communicatively coupled, to the sensor device 56 and to the noise attenuator 54. The controller 58 can be configured for determining an occurrence of a noise of the wind turbine depending on a signal received from the sensor device 56. The controller 58 can be configured for controlling the noise attenuator 54 to apply the braking torque to the high speed shaft upon determining the noise.

At least a part of a noise of a wind turbine may originate from gears meshing in a gearbox. For example, FIG. 3 schematically illustrates a first gear 35 meshing with a second gear 37 in a gearbox 30 of a drivetrain 50.

In several embodiments, a noise reduction system can include a sensor device including at least one of a noise sensor and a vibration sensor, wherein the vibration sensor is configured for sensing a vibration of a drivetrain or a drivetrain component. In particular, a vibration sensor can be configured for sensing a vibration of a high speed shaft of the drivetrain, more particularly a torsional vibration of the high speed shaft. In some embodiments, a sensor device can be configured for sensing a vibration with a vibration frequency of at least 50 Hz, particularly of at least 70 Hz or of at least 100 Hz

In some embodiments, a vibration sensor of a sensor device can be configured for sensing a vibration, in particular a vibration responsible for a noise to be reduced. In particular, the vibration sensor can be configured for sensing a vibration originating from a gear meshing of gears of a gearbox of a drivetrain, and wherein a noise attenuator of the noise reduction system is configured for applying a braking torque upon determination of the vibration by the sensor device. In particular, the sensor device can be configured for determining more than one vibration in the drivetrain.

In embodiments, the sensor device may include a strain gauge, for example positioned on a high speed shaft of a drivetrain or on a main shaft. In some embodiments, the sensor device may include an acceleration sensor, particularly an impact sound acceleration sensor. For example, the acceleration sensor may be positioned on at least one of a tower of a wind turbine, a hub of a wind turbine, a bedplate of a wind turbine and a drivetrain, for example on a gearbox. In some embodiments, the sensor device may include a generator encoder of a generator or may be included in an inverter of a generator and may be configured to monitor the output of the generator. In exemplary embodiments, the sensor device may include a microphone, positioned for example on at least one of a nacelle, a tower, a hub and rotor blades of a wind turbine. In embodiments, the sensor device may include a proximity sensor, for example positioned at a brake disk of a high speed shaft of a drivetrain.

In embodiments, a controller and/or a noise attenuator can be configured for varying a braking torque in response a vibration of a high speed shaft, wherein the vibration of the high speed shaft has a vibration frequency of at least 50 Hz, particularly of at least 70 Hz or of at least 100 Hz. In particular, the braking torque may be varied in response to a parameter of the vibration, the parameter particularly including at least one of a vibration amplitude of the vibration, a vibration frequency of the vibration and a vibration phase of the vibration.

In several embodiments, a controller and/or a noise attenuator can be configured for varying a braking torque with a counter-vibration frequency suitable for damping the vibration of the high speed shaft. In particular, the controller and/or the noise attenuator can be configured for varying the braking torque with a counter-vibration frequency of at least 50 Hz, more particularly of at least 70 Hz or of at least 100 Hz. In some embodiments, a controller and/or a noise attenuator may be configured to provide a superposition of more than one counter-vibration with respective counter-vibration frequencies, more specifically more than one counter-vibration with respective counter-vibration frequencies of at least 50 Hz, particularly of at least 70 Hz or of at least 100 Hz.

In some embodiments, a controller is configured for determining at least one of a vibration amplitude of the vibration, a vibration frequency of the vibration and a vibration phase of the vibration based on a signal received from the sensor device.

In embodiments, a controller of a noise reduction system can include a control loop for controlling a braking torque applied by a noise attenuator based on a signal received by the controller from a sensor device. In some embodiments, a controller may include a computer or other suitable processing unit. The controller may include suitable computer-readable instructions. In exemplary embodiments, the controller may be integrated in a wind turbine controller of a wind turbine. In some embodiments, the controller may be a discrete controller unit.

In some embodiments, a noise reduction system can include a phase-shifter. In such embodiments, a braking torque can be provided with a counter-vibration frequency, wherein the counter-vibration frequency at least essentially corresponds to a vibration frequency of the vibration, and wherein the braking torque can be phase-shifted by the phase shifter relative to the vibration to damp the vibration. In particular, the braking torque may be phase-shifted relative to the vibration such that a vibration amplitude of the vibration is reduced. In particular, the braking torque may be phase-shifted at least essentially by 180° relative to the vibration. In some embodiments, the phase shift between a braking torque and a vibration may be in a range of 180° plus or minus maximum 60°, particularly in a range of 180° plus or minus maximum 30° or plus or minus maximum 10°.

In some embodiments, a noise attenuator can be configured for providing a braking torque with a counter-vibration frequency, wherein the counter-vibration frequency at least essentially corresponds to a calculated and/or simulated vibration frequency in a drivetrain, particularly to a calculated gear meshing frequency or a simulated vibration frequency originating from gear meshing. In embodiments, a counter-vibration frequency of a braking torque may at least essentially correspond to a vibration frequency of a vibration determined during a calibration of a wind turbine. The vibration frequency may be stored in a controller of a noise reduction system.

In exemplary embodiments, a noise attenuator and/or a controller of a noise reduction system can be configured for providing a braking torque to a high speed shaft of a drivetrain with a counter-vibration amplitude, wherein the counter-vibration amplitude of the braking torque corresponds at least essentially to a vibration amplitude of a vibration in the drivetrain or to at least 30%, particularly to at least 50% or to at least 70% of the vibration amplitude of the vibration. The vibration amplitude of the vibration may be determined by a controller of the noise reduction system.

In some embodiments, a controller of a noise reduction system may be configured for determining for each of more than one vibration in a drivetrain at least one of a vibration amplitude, a vibration frequency and a vibration phase based on a signal received by the controller from a sensor device. For example, determining may include a signal decomposition of the signal from the sensor device. In embodiments, the controller may control a braking torque applied by a noise attenuator such that the braking torque is applied as a superposition of more than one counter-vibration with respective counter-vibration frequencies, wherein the counter-vibration frequencies at least essentially correspond to the vibration frequencies of more than one vibration, and wherein the counter-vibrations are phase-shifted by a phase shifter of the noise reduction system relative to the vibrations such that the vibrations are reduced.

In the exemplary embodiment of FIG. 4, a noise reduction system 52 includes a sensor device 56, a controller 58 and a noise attenuator 54, wherein the noise attenuator 54 can be arranged at a brake disk 60 on a high speed shaft 36 of a drivetrain 50. In particular, the brake disk 60 can be arranged on the high speed shaft 36 between a gearbox 30 of the drivetrain 50 and a generator 24 of the drivetrain 50.

In embodiments, a brake disk of a high speed shaft can be comprised of metal, for example from steel. In some embodiments, a brake disk of a high speed shaft can be comprised of non-magnetic metal.

In some embodiments, a noise attenuator of a noise reduction system includes a magnet, in particular at least one of an electromagnet, for example a coil, and a permanent magnet. The noise attenuator can be arranged at a brake disk positioned on a high speed shaft of a drivetrain. In particular, the brake disk on the high speed shaft may be comprised of metal, for example from steel or from non-magnetic metal, and the noise attenuator may be configured as an eddy current brake at the brake disk. In some embodiments, the noise attenuator may be configured for applying a constant braking torque to the brake disk.

In embodiments, the noise attenuator may be configured for varying a braking torque applied to the brake disk. In particular, the noise attenuator may include an electromagnet and varying the braking torque may be achieved by varying a current in the electromagnet. In exemplary embodiments, the noise attenuator may include a converter configured to provide a noise attenuator, in particular a noise attenuator including an electromagnet, with a current with a counter-vibration frequency, in particular with a counter-vibration frequency of at least 50 Hz, more particularly of at least 70 Hz or of at least 100 Hz.

In embodiments, a noise attenuator can be arranged at a brake disk of a high speed shaft, wherein the brake disk can be arranged on the high speed shaft between a generator and a gearbox. In some embodiments, a high speed shaft includes a gearbox output shaft coupled to the gearbox and a generator input shaft coupled to the generator, wherein the gearbox output shaft and the generator input shaft are connected at a shaft coupling. In exemplary embodiments, the brake disk may be arranged on the gearbox output shaft of the high speed shaft between the shaft coupling and the gearbox. In some embodiments, the brake disk may be arranged on the generator input shaft of the high speed shaft between the shaft coupling and the generator.

In exemplary embodiments, a brake disk on a high speed shaft can have outer teeth, particularly outer teeth extending radially from the brake disk. Two or more proximity sensors may be placed at different angles around the brake disk, and may be used in a sensor device for determining a vibration, particularly a torsional vibration, in the high speed shaft.

Embodiments of a noise reduction system with a noise attenuator at a brake disk might be suitable for retrofitting to existing wind turbines, in particular to wind turbines with a brake disk on a high speed shaft. Arranging a noise attenuator including a magnet, in particular at least one of a permanent magnet and an electromagnet, at a brake disk comprised of non-magnetic metal might provide the advantage that the magnet of the noise attenuator may not be attracted to the brake disk, which may allow positioning the magnet and the brake disk at a small distance without a risk of collision between the magnet and the brake disk.

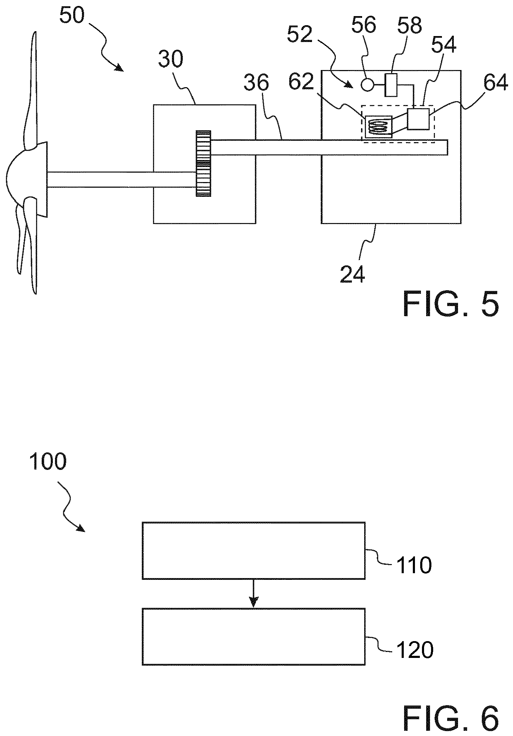

In FIG. 5, a noise reduction system 52 includes a sensor device 56, a controller 58 and a noise attenuator 54, wherein the noise attenuator 54 is arranged in a generator 24 of a drivetrain 50. The noise attenuator 54 can include an electromagnet 62 and a converter 64.

In exemplary embodiments, a noise attenuator can be arranged in a generator of a drivetrain. The noise attenuator may include at least one of a permanent magnet and an electromagnet and in particular: a converter. The noise attenuator can be configured for applying a braking torque to a high speed shaft of the drivetrain in the generator. The braking torque may be applied to a rotor of the generator, wherein the rotor of the generator is arranged on the high speed shaft. More specifically, the braking torque may be applied by varying a magnetic field generated by an electromagnet of the noise attenuator. In some embodiments, a converter of a noise attenuator may be configured for providing a varying current in an electromagnet of the noise attenuator for applying a braking torque to a high speed shaft such that a vibration in the drivetrain is reduced.

In some embodiments, a noise attenuator may include a hydraulic retarder configured for applying a braking torque to a high speed shaft of a drivetrain. In particular, the hydraulic retarder may be arranged in the generator.

Referring to FIG. 6, a flow diagram of a typical embodiment of a method 100 of reducing a noise emitted by at least one of rotor blades of a wind turbine and a tower of the wind turbine is illustrated. The wind turbine, for example a wind turbine as shown in FIG. 1 or FIG. 2, can include a drivetrain connected to the rotor blades via a hub of the wind turbine, the drivetrain including a gearbox, a generator, and a high speed shaft, wherein the gearbox and the generator are coupled by the high speed shaft. The method 100 includes determining (block 110) an occurrence of the noise, and applying (block 120) a braking torque upon determining the noise, wherein the braking torque is applied to the high speed shaft during normal operation of the wind turbine to reduce the noise.

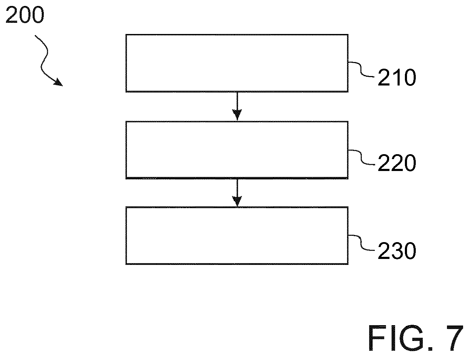

FIG. 7 shows a flow diagram of an embodiment of a method 200 of reducing a noise emitted by at least one of rotor blades of a wind turbine and a tower of the wind turbine. The method 200 can include determining (block 210) an occurrence of the noise.

In some embodiments, determining (block 210) an occurrence of a noise can include determining a vibration of a drivetrain of a wind turbine, wherein the vibration has a vibration frequency of at least 50 Hz, particularly of at least 70 Hz or of at least 100 Hz. In particular, a vibration responsible for the noise to be reduced may be determined, more particularly a vibration originating from a gear meshing of gears of a gearbox of the drivetrain. The vibration may be a torsional vibration. In typical embodiments, more than one vibration may be determined. In exemplary embodiments, a vibration in a drivetrain may be determined by a sensor device according to embodiments of the present disclosure.

The method 200 can include determining (block 220) at least one of a vibration amplitude of the vibration, a vibration frequency of the vibration and a vibration phase of the vibration.

In some embodiments, at least one of a vibration amplitude, a vibration frequency and a vibration phase may be determined for each of more than one vibration in a drivetrain. For example, determining may be performed by signal decomposition. In exemplary embodiments, determining at least one of a vibration amplitude of a vibration, a vibration frequency of the vibration and a vibration phase of the vibration may be performed by a controller based on a signal received from a sensor device according to embodiments described herein.

The method 200 of FIG. 7 includes applying (block 230) a braking torque upon determining the noise, wherein the braking torque is applied to the high speed shaft during normal operation of the wind turbine to reduce the noise.

In embodiments, the braking torque can be applied to a brake disk on a high speed shaft of a drivetrain. In some embodiments, the braking torque can be applied to a high speed shaft in a generator of a drivetrain.

In exemplary embodiments, the braking torque is varied with a counter-vibration frequency suitable for damping the vibration of the high speed shaft. The vibration of the high speed shaft may have a vibration frequency of at least 50 Hz, particularly of at least 70 Hz or of at least 100 Hz.

In several embodiments, the braking torque can be varied with a counter-vibration frequency of at least 50 Hz, particularly of at least 70 Hz or of at least 100 Hz.

In embodiments, the braking torque can be varied in response to a vibration of the high speed shaft, wherein the vibration of the high speed shaft has a vibration frequency of at least 50 Hz. The braking torque may be varied in response to a parameter of the vibration, the parameter particularly including at least one of a vibration amplitude of the vibration, a vibration frequency of the vibration and a vibration phase of the vibration.

In typical embodiments, a braking torque can be applied to a high speed shaft based on the at least one of a determined vibration amplitude of a vibration, a determined vibration frequency of the vibration and a determined vibration phase of the vibration. For example, a braking torque may be applied, wherein the braking torque, in particular a counter-vibration amplitude of the braking torque, correlates with a vibration amplitude of a vibration.

In exemplary embodiments, applying a braking torque includes providing the braking torque to a high speed shaft with a counter-vibration frequency, wherein the counter-vibration frequency corresponds at least essentially to a vibration frequency of a vibration, particularly to a determined vibration frequency of a vibration, and wherein the braking torque is phase-shifted relative to the vibration. The braking torque may be phase-shifted relative to the vibration such that a vibration amplitude of the vibration is reduced. In particular, the braking torque may be phase-shifted by 180° relative to the vibration. In some embodiments, the phase shift between a braking torque and a vibration may be in a range of 180° plus or minus maximum 60°, particularly in a range of 180° plus or minus maximum 30° or plus or minus maximum 10°. In some embodiments, a counter-vibration frequency may correspond to at least one of a calculated vibration frequency, a simulated vibration frequency and a stored vibration frequency.

In some embodiments, a braking torque applied to a high speed shaft may be constant or at least essentially constant. In particular, the braking torque may be applied to a brake disk on a high speed shaft of a drivetrain. In embodiments, the magnitude of the braking torque may be at least essentially constant over a time of at least 1 s, particularly over a time of at least 10 s or at least 1 min. In exemplary embodiments, applying a braking torque can include providing a magnetic field at a brake disk on a high speed shaft, wherein the brake disk is comprised of metal, and wherein the magnetic field is at least essentially constant over a time of at least 1 s, particularly over a time of at least 10 s or at least 1 min.

In exemplary embodiments, applying a braking torque may be performed using a noise attenuator according to the present disclosure.

The various embodiments of the method and the noise reduction system may advantageously reduce a noise emitted from a wind turbine. Embodiments described herein may particularly reduce a noise originating from a vibration of gear meshing in a gearbox of a wind turbine. In particular, a noise can be reduced, wherein the noise may be in an audible range and may be perceived by a person in the surroundings of a wind turbine. Furthermore, embodiments of the present disclosure may advantageously allow retrofitting, particularly low-cost and easy retrofitting, of existing wind turbines for reducing noise emitted from the wind turbines.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (100,200) of reducing a noise emitted by at least one of rotor blades of a wind turbine and a tower of the wind turbine, the wind turbine further comprising:
a drivetrain connected to the rotor blades via a hub of the wind turbine, the drivetrain comprising a gearbox, a generator, and a high speed shaft; wherein the gearbox and
the generator are coupled by the high speed shaft; the method (100,200) comprising:
- determining (110,210) an occurrence of the noise; and
- applying (120,230) a braking torque upon determining the noise,
- wherein the braking torque is applied to the high speed shaft during normal operation of the wind turbine to reduce the noise.

2. The method (100,200) of claim 1, wherein determining (110,210) the occurrence of the noise comprises determining a vibration of the drivetrain of the wind turbine, wherein the vibration has a vibration frequency of at least 50 Hz.

3. The method (100,200) of any one of the previous claims, wherein the braking torque is varied in response to a vibration of the high speed shaft, wherein the vibration of the high speed shaft has a vibration frequency of at least 50 Hz.

4. The method (100,200) of any one of the previous claims, wherein the braking torque is varied with a counter-vibration frequency suitable for damping the vibration of the high speed shaft.

5. The method (100,200) of any one of claims 2 to 4, the method (100,200) comprising:
- determining (220) at least one of: a vibration amplitude of the vibration, the vibration frequency of the vibration and a vibration phase of the vibration; and
- applying (120,230) the braking torque based on at least one of the determined vibration amplitude, the determined vibration frequency and the determined vibration phase.

6. The method (100,200) of any one of claims 2 to 5, wherein applying (120,230) the braking torque comprises providing the braking torque to the high speed shaft with a counter-vibration frequency, wherein the counter-vibration frequency at least essentially corresponds to the vibration frequency of the vibration; and wherein the braking torque is phase-shifted relative to the vibration.

7. The method (100,200) of any one of claims 1 to 2, wherein the braking torque is constant.

8. The method (100,200) of any one of the previous claims, wherein the braking torque is applied to a brake disk on the high speed shaft and/or wherein the braking torque is applied to the high speed shaft in the generator.

9. A noise reduction system (52) for reducing a noise emitted by at least one of rotor blades (22) of a wind turbine and a tower of the wind turbine, the wind turbine further comprising:
a drivetrain (50) connected to the rotor blades (22) via a hub (20) of the wind turbine,
the drivetrain (50) comprising a gearbox (30), a generator (24), and a high speed shaft (36); wherein the gearbox (30) and the generator (24) are coupled by the high speed shaft (36); the noise reduction system comprising:
a sensor device (56);
a noise attenuator (54) configured for applying a braking torque to the high speed shaft; and
a controller (58) coupled to the sensor device and to the noise attenuator;
wherein the controller (58) is configured for determining an occurrence of the noise depending on a signal received from the sensor device (56); and
wherein the controller (58) is configured for controlling the noise attenuator (54) to apply the braking torque to the high speed shaft (36) upon determining the noise.

10. The noise reduction system (52) of claim 9, wherein the sensor device (56) comprises at least one of: a noise sensor and a vibration sensor, wherein the vibration sensor is configured for sensing a vibration of the drivetrain (50).

11. The noise reduction system (52) of any one of claims 9 to 10, wherein the controller (58) and/or the noise attenuator (54) are configured for varying the braking torque in response to a vibration of the high speed shaft (36), wherein the vibration of the high speed shaft (36) has a vibration frequency of at least 50 Hz.

12. The noise reduction system (52) of any one of claims 9 to 11, wherein the controller (58) and/or the noise attenuator (54) are configured for varying the braking torque with a counter-vibration frequency suitable for damping the vibration of the high speed shaft (36).

13. The noise reduction system (52) of any one of claims 9 to 12, wherein the noise attenuator (54) comprises at least one of an electromagnet, a permanent magnet and a hydraulic retarder.

14. The noise reduction system (52) of any one of claims 10 to 13, wherein the controller (58) is configured for determining at least one of a vibration amplitude of the vibration, a vibration frequency of the vibration and a vibration phase of the vibration based on a signal received from the sensor device (56).

15. The noise reduction system (52) of claim 14, the noise reduction system further comprising a phase-shifter; wherein the braking torque is provided with a counter-vibration frequency, wherein the counter-vibration frequency at least essentially corresponds to the vibration frequency of the vibration; and wherein the braking torque is phase-shifted by the phase shifter relative to the vibration to damp the vibration.
